# FASCICULE DE BREVET EUROPEEN

(11) **EP 1 788 810 B1**
(45) Date de publication et mention de la délivrance du brevet: **11.11.2009**
(21) Numéro de dépôt: 05300933.8
(22) Date de dépôt: 16.11.2005
(51) Int. Cl.: H04N 7/16, H04N 7/173

(54) **Procédé et système de télévision interactive multi-utilisateurs et récepteur de télévision mettant en oeuvre un tel procédé**
Verfahren und System zum Interaktivfernseh mit mehrbenutzer und dafür geeigneten fernsehempfänger
method and system for interactive television involving multi-useres and television receiver therefor

(43) Date de publication de la demande: 23.05.2007
(73) Titulaire: Alcatel Lucent, 75008 Paris (FR)
(72) Inventeur: Betge-Brezetz, Stéphane, 75015 Paris (FR); Aghasaryan, Armen, 91120 Palaiseau (FR); Andrieu, Xavier, 91220 Bretigny sur Orge (FR)
(74) Mandataire: Korakis-Ménager, Sophie

(56) Documents cités:
- EP-A- 1 056 290
- EP-A- 1 499 127
- EP-A- 1 771 003
- WO-A-00/44168
- WO-A-03/039141
- WO-A-03/056830
- WO-A-03/087961
- WO-A-03/088671
- WO-A-2004/071092
- WO-A-2004/071093
- WO-A-2005/041577
- GB-A- 2 370 456
- US-A- 5 831 664
- US-A1- 2002 152 091
- US-A1- 2005 076 393

## Description

La présente invention concerne un procédé et un système de télévision interactif multi-utilisateurs. Elle concerne également un récepteur de télévision et un terminal de téléphonie mobile mettant en oeuvre un tel procédé. L'invention s'applique notamment pour des services interactifs offerts à partir d'un même récepteur TV à une pluralité d'utilisateurs situés au voisinage de ce récepteur.

Les services de télévision interactifs sont de plus en plus utilisés. Des ressources complémentaires sont téléchargées sur les récepteurs de télévision. Les utilisateurs peuvent simultanément regarder un programme TV complété par exemple à l'arrière-plan par des informations complémentaires, du type vidéo, audio, texte, images ou autres données liées au programme. Ces informations complémentaires qui seront appelées par la suite informations interactives sont transmises avec le flux des émissions radiodiffusées. Plus particulièrement un programme logiciel corrélé avec un programme TV est téléchargé sur les récepteurs TV. Des programmes interactifs logiciels sont par exemple créés sur des plateforme de service puis diffusés avec les programmes TV auxquels ils se rapportent, simultanément ou non.
Les fournisseurs de programmes de télévision interactive cherchent à proposer des services ayant des performances toujours croissantes en termes d'échanges interactifs Cela signifie notamment augmenter l'offre d'informations interactives et aussi les possibilités de réaction des utilisateurs. L'offre de services interactifs multi-ulisateurs à partir d'un seul poste TV entre dans le cadre de cette expansion de l'offre globale. Ce type de service interactif permettrait à plusieurs utilisateurs regroupés autour d'un même poste TV d'interagir avec le programme en cours, dans le cadre d'un cercle familial par exemple. Ce type de service pourrait être avantageusement mis en oeuvre pour des jeux TV, mais aussi pour du télé-achat par exemple, où les utilisateurs interagissent à partir du même poste TV.
Il existe actuellement des solutions de services de télévision interactive aux possibilités plus ou moins limitées, en particulier pour des applications de proximité multi-utilisateurs.

Dans une première solution, l'utilisateur compose un numéro de téléphone spécial affiché sur l'écran de télévision durant un programme particulier. Le numéro de téléphone composé peut éventuellement être remplacé par un message du type SMS. Ce type d'interaction n'est pas automatique. L'utilisateur doit composer manuellement les numéros des services proposés. Les offres de service sont donc limitées et peu pratiques pour les utilisateurs.
Une deuxième solution met en oeuvre des interactions via les émission classiques de programmes de télévision ou via les chaîne câblées. Dans ce cas, les interactions se font au moyen de télétextes ou de menus contextuels affichés sur les écrans de télévision. Elles sont une partie intégrante des services fournis par les réseaux hertziens ou câblés. Cette solution est peu adaptée à un contexte de service interactive monoposte et multi-ulisateurs.
Une troisième solution utilise le réseau Internet, en particulier ce que l'on appelle les canaux IP-TV. Ces types de services peuvent faire appel à des opérateurs de téléphonie mobile, par exemple en envoyant des messages SMS via les écrans de télévision. Les accès Internet permettent de nombreuses opportunités de services interactifs impliquant aussi les opérateurs de téléphonie mobile. Cependant, cette solution couvre une technologie de transmission TV particulière qui est la télévision sur Internet. Elle requière une souscription à un fournisseur d'accès au réseau Internet. Cette solution cible donc essentiellement les souscripteurs d'accès au réseau Internet et n'est pas assez ouverte pour offrir des services à une clientèle plus large.
Une quatrième solution utilise la télévision numérique terrestre et plus particulièrement le standard DVB-H, DVB étant un acronyme de l'expression anglo-saxonne "Digital Video Broadcasting". Le standard DVB-H permet aux terminaux de réception de se déplacer librement tout en recevant les émissions de télévision, solution idéale pour des terminaux de type téléphone mobile. Cette solution combine donc très bien la transmission TV avec la téléphonie mobile. Cependant elle est coûteuse à mettre en oeuvre, en particulier au niveau des moyens techniques d'interactions entre le réseau de télévision et les réseau de téléphonie mobile, sachant que le standard DVB-H n'utilise pas du tout le réseau de téléphonie mobile. Par ailleurs elle nécessite une nouvelle infrastructure de diffusion. Enfin et surtout, cette solution ne permet pas une interaction simultanée sur un simple récepteur d'un programme de télévision impliquant de multiples utilisateurs.

Un but de l'invention est notamment de permettre la mise en oeuvre d'un service de télévision où une pluralité d'utilisateurs interagissent à avec un même poste TV. A cet effet, l'invention a pour objet un procédé, un système, un dispositif et un terminal selon les revendications.

L'invention a pour principaux avantages qu'elle permet une personalisation des applications, qu'elle permet d'identifier parfaitement les différents acteurs,qu'elle est simple à mettre en oeuvre et qu'elle est économique.

D'autres caractéristiques et avantages de l'invention apparaîtront à l'aide de la description qui suit faite en regard de dessins annexés qui représentent :
- la figure 1, deux unités fonctionnelles pour la mise en oeuvre du procédé selon l'invention, une première unité équipant un dispositif de réception de télévision et la deuxième unité équipant un terminal de téléphonie mobile;
- la figure 2, un système selon l'invention en cours de fonctionnement lors d'une diffusion d'un programme de télévision interactif.

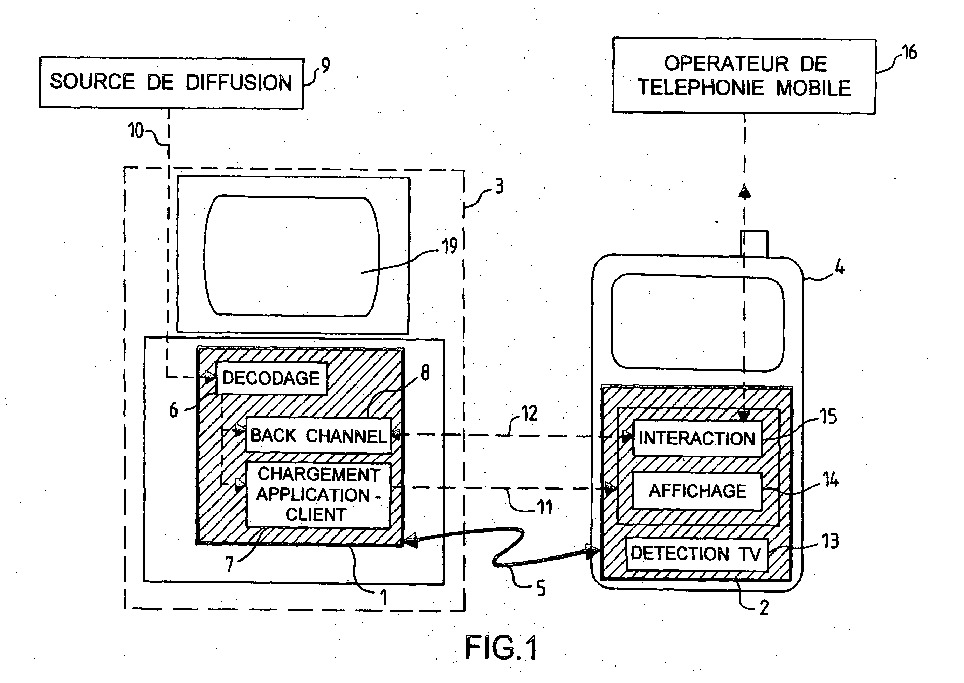

La figure 1 présente des unités fonctionnelles 1, 2 utilisées pour mettre en oeuvre l'invention. Une première unité 1 fonctionne dans un dispositif de réception de programmes de télévision 3. Cette première unité 1 est par exemple un module logiciel implanté dans le récepteur TV 3 ou dans un boîtier, par exemple du type décodeur, relié à ce récepteur. De préférence le récepteur TV 3 est comporte un système d'exploitation encore appelé OS selon l'expression anglo-saxonne « operating system ». Le système d'exploitation permet de faire fonctionner les programmes contenus dans la première unité fonctionnelle 1. L'unité fonctionnelle peut donc être implantée dans le récepteur TV comme tout autre logiciel applicatif. Si le récepteur TV ne possède pas d'OS, l'unité fonctionnelle 1 peut être implanté dans un boîtier de décodage par exemple, relié au récepteur TV. Cette unité fonctionnelle 1 sera appelée par la suite unité TV. Pour la suite de la description, on prendra un récepteur de télévision TV comme exemple de dispositif de réception de programme de télévision.
La deuxième unité 2 fonctionne sur un terminal de téléphonie mobile 4, appelé par la suite téléphone mobile. La suite de la description sera faite en référence à un téléphone mobile, mais tout type de terminal de réseau de téléphonie mobile peut être utilisé. Cette deuxième unité fonctionnelle 2 est par exemple un module logiciel implanté dans le téléphone mobile 4. Elle fonctionne avec le système d'exploitation du téléphone mobile 4. Cette unité fonctionnelle 2 sera appelée par la suite unité mobile.
Les deux unités 1, 2 communiquent entre-elles par un réseau de communication local 5 sans fil. Ce réseau est par exemple un réseau « bluetooth », « Wi-Fi », « UWB », « Wireless USB », « Fast IRDA » ou encore «Zig Bee ». Les unités 1, 2 comportent les interfaces de communications nécessaires pour se connecter au réseau de communication local. Ces moyens de communication locale sont généralement existants sur les terminaux de téléphonie actuels.

L'unité TV 1 comporte un module 6 de décodage, un module 7 de chargement de morceaux de programmes interactifs à destination des téléphones mobiles et un module de communication 8 avec les téléphones mobiles.
Le premier module 6 décode les informations d'interactives émises par une source de diffusion 9 de programmes de télévision. Plus particulièrement, lors de la diffusion d'un programme TV, le module de décodage 6 extrait le programme interactif parmi les autres signaux du flux radiodiffusé 10. Un programme interactif comporte un applicatif et des données interactives. Ce programme interactif dépend du programme TV. Le flux radiodiffusé comporte donc le programme TV et les données du programme interactif lié à ce programme TV. Cette fonction de décodage classique peut être réalisée par un module déjà présent dans le récepteur TV ou dans un boîtier de décodage associé. Les informations interactives sont par exemple du type vidéo, audio, ou texte. La diffusion 10 des programmes TV et des informations interactives vers le récepteur TV peut être de type analogique ou numérique. Elle emprunte la voie hertzienne ou passe par un réseau câblé.
Le module de chargement 7 stocke les programmes interactifs puis transfert des morceaux de programme vers les unités mobiles 2. Comme cela sera montré par la suite, il fonctionne comme un serveur dans une application du type clients-serveur.
Les programmes interactifs sont chargés en fonction des programmes en cours. Ces programmes interactifs sont extraits par le module de décodage 6 puis stockés dans le module 7 de chargement. Ce module transfert ensuite à l'unité mobile 2 des parties des programmes interactifs en fonction du programme TV en cours et des demandes des utilisateurs. Le transfert 11 des données interactives vers l'unité mobile 2 utilise le réseau de communication local 5. Avantageusement, le programme interactif est par exemple écrit en java et comporte un programme Applet. Applet provient de l'expression anglo-saxonne « APPLication widgET ». C'est un morceau d'applicatif écrit en langage Java. Ce type de programme peut être téléchargé à chaque utilisation, en l'occurrence à l'émission de chaque programme TV dans la mise en oeuvre du procédé selon l'invention. Avantageusement, un applet est portable, c'est à dire qu'il peut s'exécuter sur de nombreux systèmes sans devoir être modifié et ne dépend pas du système. Il peut donc être téléchargé sur les téléphones mobiles indépendamment de la version de leur système d'exploitation. Il est d'autant plus adapté que la plupart des systèmes implantés dans les téléphones mobiles sont écrits en java. De plus, le téléchargement de l'applet est quasi-instantané.
Le module de communication 8 contrôle des flux de données bidirectionnels entre l'unité mobile 2 et l'unité TV 1. Il reçoit et traite les requêtes de utilisateurs formulées via l'unité mobile 2. Il envoie par ailleurs des informations interactives complémentaires à l'unité mobile 2 en fonction des requêtes envoyées par cette même unité 2. Le module 8 forme un canal de communication de type « back channel », connu par ailleurs. Les échanges 12 entre le module de communication 8 et l'unité mobile 2 se font par le réseau de communication local 5. Les requêtes traitées par le module de communication 8 dépendent du programme en cours. Des demandes d'informations spécifiques, complémentaires, sont traitées par ce module 8. Ce sont par exemple des informations personnalisées. Au cours de la retransmission interactive d'un match de football par exemple, un utilisateur peut demander ainsi des informations complémentaires sur tel ou tel joueur.
Le module de chargement 7 et le module de communication 8 utilisent avantageusement des interfaces de communication locale implantés dans le récepteur TV 3. Si ce dernier ne comporte pas de telles interfaces, ces dernières doivent êtres installées.

L'unité mobile 2 comporte un module 13 de détection d'un récepteur TV, un module d'affichage 14 et un module d'interaction 15.
Le module de détection 13 a notamment pour fonction de détecter un récepteur TV ou un boîtier associé présent dans l'environnement de l'unité mobile 2. Dans l'exemple de la figure 1, le module de détection détecte le récepteur TV 3. Le mode de détection dépend du type de canal de communication local 5 utilisé. En cas d'utilisation d'une liaison bluetooth ou Wi-Fi par exemple, la liaison peut être classiquement activée dès l'instant où les deux appareils à la fois sont mis en marche. Dans tous les cas, dès que le module 13 a détecté le récepteur TV 3 il établit une communication avec l'unité TV 1 via le réseau de communication local 5.
Le module d'affichage 14 comporte un programme pour afficher les informations interactives sur l'écran du téléphone mobile 4. A cet effet il utilise les ressources du téléphone mobile 4. Si l'on revient à l'exemple précédent de retransmission interactive d'un match de football, les informations complémentaires relatives à un joueur sont affichées sur l'écran du téléphone mobile. Elles sont personnalisées, seul l'utilisateur de ce téléphone mobile reçoit ces informations. Les informations affichées peuvent bien sûr prendre aussi la forme d'un menu d'interaction, ce menu dépendant du programme de télévision. Le menu d'intéraction permet en outre d'utiliser les ressources du téléphone mobile 4.

Le module d'interaction 15 déroule le programme interactif proprement dit. Plus particulièrement le programme interactif est appliqué sur le téléphone mobile au niveau du module d'interaction. Cela signifie que des morceaux du programme applicatif stocké dans l'unité TV 1 sont téléchargés dans ce module 15. Avantageusement, comme cela a été indiqué précédemment, ces morceaux de programme sont par exemple des applets. Les applets sont téléchargés dynamiquement en fonction du programme TV et notamment en fonction des requêtes émises par l'unité mobile 2 qui traduisent les demandes de l'utilisateur. Le morceau de programme interactif agit aussi sur les ressources d'affichage du téléphone mobile pour commander l'affichage des informations qui apparaissent à l'écran.
Le module 15 communique avec le module de communication 8 de l'unité TV 1 pour obtenir des informations complémentaires. Il peut aussi utiliser les services de l'opérateur de téléphonie mobile 16 pour obtenir des informations complémentaires, en relation avec le programme TV en cours. Il peut ainsi lancer l'envoi d'un SMS ou composer automatiquement un numéro de téléphone pour communiquer avec un service en relation avec le programme TV. Ce message peut par exemple être un vote ou un choix fait par l'utilisateur du téléphone mobile à une question affichée sur l'écran 19 du récepteur TV. Le module 15 peut aussi accéder à des services disponibles sur Internet.

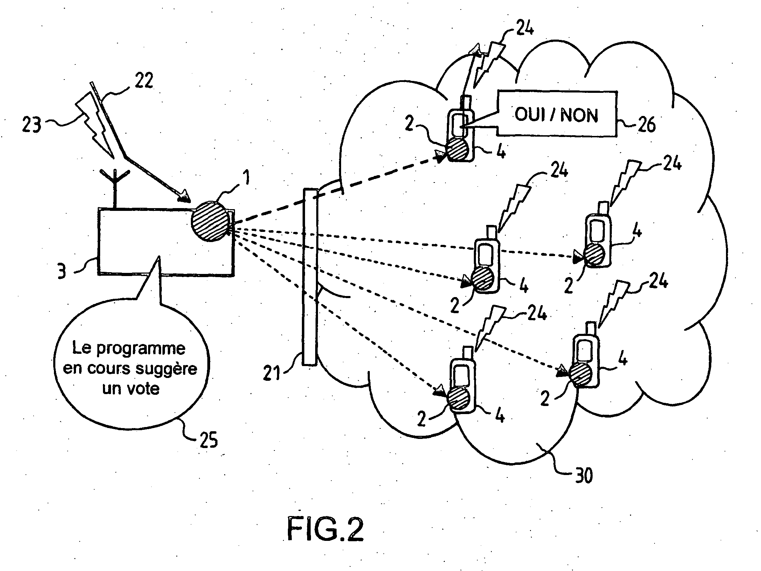

La figure 2 illustre les interactions entre les différents éléments d'un système mettant en oeuvre le procédé selon l'invention. Plus particulièrement, la figure 2 présente un récepteur de télévision équipé d'une unité TV 1 telle que décrite précédemment et plusieurs téléphones mobiles 4. Ces téléphones mobiles sont équipés chacun d'une unité mobile 2 telle que décrite précédemment. Les téléphones mobiles sont activés, en relation avec un opérateur mobile. Ils sont situés à proximité du récepteur TV 3 dans une aire 30 où la communication locale 5 peut être activée avec ce récepteur. Un programme de télévision 23 est radiodiffusé et capté par le récepteur TV 3. Un programme logiciel interactif 22 particulier, lié à ce programme de télévision est transmis simultanément par le flux radiodiffusé puis extrait par le module de décodage 6. Le programme intéractif peut aussi être diffusé avant ou après la diffusion du programme TV.

Ce programme intéractif 22 est alors stocké dans le module de chargement 7 en sortie du module de décodage 6. Ce programme interactif a une fonction du type serveur en regard des unités mobiles 2 ayant un rôle de postes clients. L'unité TV 1, côtés serveur, dialogue avec les unités mobiles 2, côté clients, par l'intermédiaire de son module de communication 8, le système fonctionnant ainsi dans une configuration du type clients-serveur. On considère par la suite le programme interactif téléchargé dans l'unité TV 3 comme une application serveur et les morceaux de programme interactifs téléchargés dans les unités mobiles 2 comme des applications clientes.
L'établissement 21 de la communication locale 5 peut-être enclenché après le téléchargement du programme interactif, l'application serveur, dans l'unité TV 1. La communication locale peut aussi être établie avant ce téléchargement.
Pendant la diffusion du programme TV 23, ou à un autre moment, les différentes applications clientes vont être transférées vers les unités mobiles 2 et exécutées par ces dernières dans les téléphones mobiles 4 avec leurs ressources propres, en particulier leur système d'exploitation. Comme cela a été indiqué précédemment, les applications clientes sont par exemple avantageusement programmées en langage Java sous forme d'applets. Les applications clientes sont téléchargées par le module de chargement 7. De préférence l'utilisateur a la possibilité de valider ou non ce transfert. Cette possibilité de choix peut être traitée par le module d'affichage 14 des unités mobiles 2.
Chaque application cliente, une fois téléchargée dans un téléphone mobiles 4 est exécutée indépendant des autres applications clientes téléchargées dans les autres téléphones mobiles. En cours d'exécution de l'application cliente, l'unité mobile 2 peut-être en communication d'une part avec l'unité TV 1 par via le canal de communication local puis le module de communication 8 de l'unité TV et d'autre part avec le réseau de téléphonie mobile 24, par exemple pour envoyer un message du type SMS ou composer un numéro de téléphone. Plus particulièrement, le système d'exploitation du téléphone mobile 4 communique classiquement avec le réseau de téléphonie mobile auquel est abonné l'utilisateur et avec le serveur de l'application localisé dans l'unité TV 1 au niveau du récepteur de télévision 3.

La figure 2 illustre un exemple de diffusion où le programme en cours suggère un vote 25. Les utilisateurs ou téléspectateurs ont à répondre « oui » ou « non » 26. La réponse 27 est matérialisée par exemple un SMS ou par la composition d'un numéro de téléphone spécifique. Le message SMS ou la composition du numéro de téléphone sont effectués automatiquement en fonction de la réponse qu'aura sélectionné l'utilisateur. La sélection peut se faire de multiples façons, elle peut se faire par exemple à partir de rubriques affichées sur l'écran des téléphones mobiles. Dans tous les cas, les sélections des réponses proposées pour le vote et l'envoi des réponses automatiques sur le réseau de téléphonie mobile sont effectuées par les applications clientes. Dans le cas de l'exemple de la figure 2 relative à un vote, un procédé selon l'invention offre de multiples possibilités de traitement. Une première possibilité est de proposer un vote où les réponses possibles sont affichées à l'écran en fonction de l'objet du vote. L'objet du vote et les réponses possibles sont les mêmes pour tous les téléspectateurs. Les réponses aux votes sont réalisées comme indiqué précédemment. Le résultat du vote est affiché sur l'écran 19 du récepteur TV 3. Le résultat indiqué concerne les téléspectateurs inclus dans l'aire 30 mais aussi tous les autres téléspectateurs. En parallèle, le résultat local peut être affiché sur l'écran de TV 3 si les réponses faites par les téléspectateurs présents dans l'aire 30 sont envoyées en parallèle à l'unité TV 3. Ce résultat local peut alors être affiché sur l'écran TV en superposition du résultat général. Une autre possibilité offerte est la personnalisation du vote. Dans ce cas, l'objet du vote peut être affiché non plus sur l'écran de TV mais sur l'écran du téléphone mobile, les réponses étant envoyées vers le réseau de téléphonie mobile et/ou l'unité TV 1, offrant ainsi une personalisation en fonction des utilisateurs.
Un procédé selon l'invention augmente les performances de nombreux autres exemples de programme de télévision interactive On peut par exemple considérer un programme de télé-achat. Les articles sont présentés par le programme de télévision. Chaque utilisateur a la possibilité de demander des précisions particulières sur les articles proposés. A cet effet, l'unité mobile du téléphone de l'un utilisateur envoie une requête spécifique au module de communication 8. Les informations complémentaires relatives à l'article sont affichées sur l'écran du téléphone mobile de l'utilisateur. Ce dernier peut ensuite effectuer la commande de l'article via le réseau de téléphonie mobile. Avantageusement, son identité et ses coordonnées bancaires sont parfaitement identifiées à partir ce son compte personnel d'abonné auprès de l'opérateur. La procédure d'achat est ainsi facilité et fiabilisée.
Un autre exemple de programme interactif amélioré concerne la prise de paris, notamment dans le cadre de courses hippiques. Dans cet exemple, le poste TV 3 de la figure 2 est installé dans un café ou dans un bureau spécialisé. Un programme hippique est retransmis et les utilisateurs présents dans le café ont la possibilité à l'aide de leurs téléphones mobiles de parier sur les chevaux au lieu de remplir un formulaire. Les paris sont par exemple envoyés sur le réseau de téléphonie mobile à l'organisme qui organise le pari, par exemple le PMU en France. Les parieurs sont identifiés sans ambiguïté par leurs comptes utilisateurs de téléphone mobile.

Les exemples précédents illustrent les performances offertes par un procédé selon l'invention. Dans ces exemples les procédures interactives sont automatiques mais restent sous le contrôle des utilisateurs. De multiples utilisateurs peuvent interagir simultanément avec un seul récepteur TV. Enfin la mise en oeuvre d'un procédé selon l'invention est économique car elle utilise les structures de radiodiffusion, les réseaux de communications de téléphonie mobiles et les moyens de communications locales déjà existants.

## Revendications

1. Procédé de télévision interactive où un programme de télévision (23) et au moins un programme logiciel interactif lié (22) sont diffusés vers un dispositif de réception TV (3), **caractérisé en ce que** des morceaux du programme interactif lié, programmés sous forme d'applets, sont téléchargés à chaque utilisation dans des terminaux (4) reliés à un réseau de téléphonie mobile à partir du dispositif de réception TV (3) selon une architecture clients-serveur, le dispositif de réception TV (3) formant le poste serveur et les terminaux (4) formant les postes clients, un morceau de programme interactif étant exécuté par le système d'exploitation d'un terminal (4), un terminal échangeant des données avec le dispositif de réception TV (3) par un canal de communication (5).

2. Procédé selon la revendication 1, **caractérisé en ce que** le canal de communication (5) est un canal de communication local sans fil.

3. Procédé selon l'une quelconque des revendications précédentes, **caractérisé en ce que** les programmes interactifs téléchargés dans les terminaux (4) sont exécutés indépendamment les uns des autres.

4. Procédé selon l'une quelconque des revendications précédentes, **caractérisé en ce que** des données de programme interactif complémentaires sont téléchargées dans un terminal (4) en fonction de requêtes établies par ce terminal (4).

5. Procédé selon l'une quelconque des revendications précédentes, **caractérisé en ce que** des données de programme interactif complémentaires sont téléchargées dans un terminal (4) via le réseau de téléphonie mobiles.

6. Procédé selon l'une quelconque des revendications précédentes, **caractérisé en ce que** le programme interactif (4) téléchargé dans un terminal exécute des interactions avec des services de téléphonie mobile.

7. Procédé selon l'une quelconque des revendications précédentes, **caractérisé en ce que** les morceaux de programme interactif sont programmés en langage Java sous forme d'applets.

8. Procédé selon l'une quelconque des revendications précédentes, **caractérisé en ce qu'**une unité fonctionnelle (1) est implantée dans le dispositif de réception TV (3), cette unité fonctionnelle comportant :
- un module de chargement (7) stockant le programme logiciel interactif (22) et transférant via le canal de communication (5) les morceaux de programme interactif vers les terminaux (4) ;
- un module de communication (8) contrôlant les flux de données bidirectionnels entre les terminaux (4) et le dispositif de réception TV (3), les flux transitant par le canal de communication (5).

9. Système de télévision interactive où un programme de télévision (23) et au moins un programme logiciel interactif lié (22) sont diffusés vers un dispositif de réception TV (3), **caractérisé en ce qu'**il comporte :
- le dispositif de réception TV (3) formant le poste serveur ;
- au moins un terminal (4) relié à un réseau de téléphonie mobile formant un poste client ;
des morceaux du programme interactif lié, programmés sous forme d'applets, étant téléchargés à chaque utilisation dans un terminal (4) à partir du dispositif de réception TV (3) et exécutés par le système d'exploitation du terminal (4), le terminal étant relié au dispositif de réception TV (3) par un canal de communication (5).

10. Système selon la revendication 9, **caractérisé en ce** le canal de communication (5) est un canal de communication local.

11. Système selon l'une quelconque des revendications 9 ou 10, **caractérisé en ce que** les programmes interactifs téléchargés dans les terminaux (4) sont exécutés indépendamment les uns des autres.

12. Système selon l'une quelconque des revendications 9 à **caractérisé en ce que** des données de programme interactif complémentaires sont téléchargées dans un terminal (4) en fonction de requêtes établies par ce terminal (4).

13. Système selon l'une quelconque des revendications 9 à 12, **caractérisé en ce que** le programme interactif (4) téléchargé dans un termina! exécute des interactions avec des services de téléphonie mobile.

14. Système selon l'une quelconque des revendications 9 à 13, **caractérisé en ce que** les morceaux de programme interactif sont programmés en langage Java sous forme d'applets.

15. Système selon l'une quelconque des revendications 9 à 14, **caractérisé en ce qu'**une unité fonctionnelle (1) est implantée dans le dispositif de réception TV (3), cette unité fonctionnelle comportant :
- un module de chargement (7) stockant le programme interactif (22) et transférant via le canal de communication (5) les morceaux de programme interactif vers un terminal (4) ;
- un module de communication (8) contrôlant les flux de données bidirectionnels entre un terminal (4) et le dispositif de réception TV (3), les flux transitant par le canal de communication (5).

16. Dispositif de réception de télévision, **caractérisé en ce qu'**il est équipé d'une unité fonctionnelle (1) comportant ;
- un module de décodage pour extraire d'un flux diffusé (10) un programme logiciel interactif (22) lié à un programme de télévision (23) ;
- un module de chargement (7) stockant le programme interactif (22) et transférant à chaque utilisation morceaux de programme interactif programmés sous forme d'applets vers des terminaux (4) reliés à un réseau de téléphonie mobile, les morceaux de programme étant destinés à être exécutés par les terminaux (4) ;
- un module de communication (8) contrôlant les flux de données bidirectionnels entre un terminal (4) et l'unité fonctionnelle (1).

17. Dispositif selon la revendication 16, **caractérisé en ce qu'**il comporte une interface pour communiquer avec un terminal (4) par un canal de communication local (5).

18. Dispositif selon l'une quelconque des revendications 16 ou 17, **caractérisé en ce qu'**ayant un système d'exploitation, le module de chargement (7) et le module de communication (8) sont des modules logiciels fonctionnant sur ce système d'exploitation.

19. Dispositif selon l'une quelconque des revendications 16 à 18, **caractérisé en ce que** les morceaux de programme interactif sont programmés en langage Java sous forme d'applets.

20. Terminal de téléphonie mobile, **caractérisé en ce qu'**il comporte au moins ;
- un module de détection (13) d'un dispositif de réception de télévision (3) par un canal de communication sans fil (5) ;
- un système d'exploitation pour exécuter au moins un morceau de programme logiciel intéractif programmé sous forme d'applet et téléchargé à chaque utilisation via le canal de communication (5) par le dispositif de réception de télévision (3), le morceau de programme intéractif étant lié à un programme de télévision diffusé sur le dispositif de réception de télévision.

21. Terminal selon la revendication 20, **caractérisé en ce qu'**il comporte un module d'affichage (14) exécutant un programme pour afficher sur son écran des informations liées au morceau de programme intéractif.

22. Terminal selon l'une quelconque des revendications 20 ou 21, **caractérisé en ce qu'**il comporte un module (15) exécutant le morceau de programme intéractif, communiquant avec le canal de communication locale (5) et avec le réseau de téléphonie mobile.

## Claims

1. Interactive television method in which a television program (23) and at least one related interactive software program (22) are broadcast to a TV reception device (3), **characterised in that** segments of the related interactive program, programmed in the form of applets, are downloaded on each use in terminals (4) connected to a mobile telephony network from the TV reception device (3) according to a client-server architecture, with the TV reception device (3) forming the server station and the terminals (4) forming the client stations, with an interactive program segment being run by the operating system of a terminal (4), with a terminal exchanging data with the TV reception device (3) through a communication channel (5).

2. Method according to claim 1, **characterised in that** the communication channel (5) is a local wireless communication channel.

3. Method according to one of the previous claims, **characterised in that** the interactive programs downloaded in the terminals (4) are run independently of each other.

4. Method according to one of the previous claims, **characterised in that** additional interactive program data is downloaded in a terminal (4) based on requests produced by this terminal (4).

5. Method according to one of the previous claims, **characterised in that** additional interactive program data is downloaded in a terminal (4) via the mobile telephony network.

6. Method according to one of the previous claims, **characterised in that** the interactive program downloaded in a terminal runs (4) interactions with mobile telephony services.

7. Method according to one of the previous claims, **characterised in that** the interactive program segments are programmed in Java language in the form of applets.

8. Method according to one of the previous claims, **characterised in that** a functional unit (1) is installed in the TV reception device (3), with this functional unit comprising:
- a loading module (7) storing the interactive software program (22) and transferring the interactive program segments via the communication channel (5) to the terminals (4);
- a communication module (8) controlling the bi-directional data flows between the terminals (4) and the TV reception device (3), with the flows passing via the communication channel (5).

9. Interactive television system in which a television program (23) and at least one related interactive software program (22) are broadcast to a TV reception device (3), **characterised in that** it comprises:
- the TV reception device (3) forming the server station;
- at least one terminal (4) connected to a mobile telephony network forming a client station;
with segments of the related interactive program, programmed in the form of applets, being downloaded on each use in a terminal (4) from the TV reception device (3) and run by the terminal operating system (4), with the terminal being connected to the TV reception device (3) by a communication channel (5).

10. System according to claim 9, **characterised in that** the communication channel (5) is a local communication channel.

11. System according to one of claims 9 or 10, **characterised in that** the interactive programs downloaded in the terminals (4) are run independently of each other.

12. System according to one of claims 9 to 11, **characterised in that** additional interactive program data is downloaded in a terminal (4) based on requests produced by this terminal.

13. System according to one of claims 9 to 12, **characterised in that** the interactive program downloaded in a terminal (4) runs interactions with mobile telephony services.

14. System according to one of claims 9 to 13, **characterised in that** the interactive program segments are programmed in Java language in the form of applets.

15. System according to one of claims 9 to 14, **characterised in that** a functional unit (1) is installed in the TV reception device (3), with this functional unit comprising:
- a loading module (7) storing the interactive program (22) and transferring the interactive program segments via the communication channel (5) to a terminal (4);
- a communication module (8) controlling the bi-directional data flows between a terminal (4) and the TV reception device (3), with the flows passing via the communication channel (5).

16. Television reception device, **characterised in that** it is equipped with a functional unit (1) comprising:
- a decoding module for extracting from a broadcast flow (10) an interactive software program (22) related to a television program (23);
- a loading module (7) storing the interactive program (22) and transferring, on each use, interactive program segments programmed in the form of applets to terminals (4) connected to a mobile telephony network, with the program segments intended to be run by the terminals (4);
- a communication module (8) controlling the bi-directional data flows between a terminal (4) and the functional unit (1).

17. Device according to claim 16, **characterised in that** it comprises an interface for communicating with a terminal (4) through a local communication channel (5).

18. Device according to either of claims 16 or 17, **characterised in that** having an operating system, the loading module (7) and the communication module (8) are software modules which operate on this operating system.

19. Device according to one of claims 16 to 18, **characterised in that** the interactive program segments are programmed in Java language in the form of applets.

20. Mobile telephony terminal, **characterised in that** it comprises at least:
- a module for detection (13) of a television reception device (3) by a wireless communication channel (5);
- an operating system for running at least one interactive software program segment programmed in the form of applets and downloaded on each use via the communication channel (5) by the television reception device (3), with the interactive program segment being related to a television program broadcast on the television reception device.

21. Terminal according to claim 20, **characterised in that** it comprises a display module (14) running a program to display on its screen information relating to the interactive program segment.

22. Terminal according to either of claims 20 or 21, **characterised in that** it comprises a module (15) running the interactive program segment, communicating with the local communication channel (5) and with the mobile telephony network.

## Patentansprüche

1. Verfahren zur Durchführung von interaktivem Fernsehen, wobei ein Fernsehprogramm (23) und mindestens ein verknüpftes interaktives Software-Programm (22) an eine TV-Empfangsvorrichtung (3) ausgestrahlt werden (3), **dadurch gekennzeichnet, dass** Teile des verknüpften interaktiven Programms, Programme in der Form von Applets, bei jeder Verwendung auf an ein Mobilfunknetz angebundene Endgeräte (4) von der TV-Empfangsvorrichtung (3) gemäß einer Client-Server-Architektur heruntergeladen werden, wobei die TV-Empfangsvorrichtung (3) die Server-Station und die Endgeräte (4) die Client-Stationen bilden, wobei ein Teil des interaktiven Programms vom Betriebssystem eines Endgeräts (4) ausgeführt wird, wobei ein Endgerät über einen Kommunikationskanal (5) Daten mit der TV-Empfangsvorrichtung (3) austauscht.

2. Verfahren nach Anspruch 1, **dadurch gekennzeichnet, dass** der Kommunikationskanal (5) ein lokaler drahtloser Kommunikationskanal ist.

3. Verfahren nach einem beliebigen der vorstehenden Ansprüche, **dadurch gekennzeichnet, dass** die auf die Endgeräte (4) heruntergeladenen interaktiven Programme unabhängig voneinander ausgeführt werden.

4. Verfahren nach einem beliebigen der vorstehenden Ansprüche, **dadurch gekennzeichnet, dass** entsprechend den von einem Endgerät (4) erstellten Anfragen zusätzliche Daten des interaktiven Programms auf dieses Endgerät (4) heruntergeladen werden.

5. Verfahren nach einem beliebigen der vorstehenden Ansprüche, **dadurch gekennzeichnet, dass** zusätzliche Daten des interaktiven Programms über das Mobilfunknetz auf ein Endgerät (4) heruntergeladen werden.

6. Verfahren nach einem beliebigen der vorstehenden Ansprüche, **dadurch gekennzeichnet, dass** das auf ein Endgerät (4) heruntergeladene interaktive Programm mit Mobilfunkdiensten interagiert.

7. Verfahren nach einem beliebigen der vorstehenden Ansprüche, **dadurch gekennzeichnet, dass** die Teile des interaktiven Programms in der Form von Applets in Java programmiert werden.

8. Verfahren nach einem beliebigen der vorstehenden Ansprüche, **dadurch gekennzeichnet, dass** eine Funktionseinheit (1) in der TV-Empfangsvorrichtung (3) eingerichtet ist, wobei diese Funktionseinheit umfasst:
- Ein Lademodul (7), welches das interaktive Software-Programm (22) speichert und die Teile des interaktiven Programms über den Kommunikationskanal (5) an die Endgeräte (4) überträgt;
- ein Kommunikationsmodul (8), welches die bidirektionalen Datenflüsse zwischen den Endgeräten (4) und der TV-Empfangsvorrichtung (3) steuert, wobei die Daten durch den Kommunikationskanal (5) fließen.

9. Interaktives Fernsehsystem, in welchem ein Fernsehprogramm (23) und mindestens ein verknüpftes interaktives Software-Programm (22) an eine TV-Empfangsvorrichtung (3) ausgestrahlt werden, **dadurch gekennzeichnet, dass** es umfasst:
- die TV-Empfangsvorrichtung (3), welche die Server-Station bildet;
- mindestens ein an ein Mobilfunknetz angebundenes Endgerät (4), welches die Client-Station bildet;
wobei Teile des verknüpften interaktiven Programms, in der Form von Applets programmiert, bei jeder Verwendung von der TV-Empfangsvorrichtung (3) auf ein Endgerät (4) heruntergeladen und vom Betriebssystem des Endgeräts (4) ausgeführt werden, wobei das Endgerät über einen Kommunikationskanal (5) mit der TV-Empfangsvorrichtung (3) verbunden ist.

10. System nach Anspruch 9, **dadurch gekennzeichnet, dass** der Kommunikationskanal (5) ein lokaler Kommunikationskanal ist.

11. System nach einem beliebigen der Ansprüche 9 oder 10, **dadurch gekennzeichnet, dass** die auf die Endgeräte (4) heruntergeladenen interaktiven Programme unabhängig voneinander ausgeführt werden.

12. System nach einem beliebigen der Ansprüche 9 bis 11, **dadurch gekennzeichnet, dass** entsprechend den von einem Endgerät (4) erstellten Anfragen zusätzliche Daten des interaktiven Programms auf dieses Endgerät (4) heruntergeladen werden.

13. System nach einem beliebigen der Ansprüche 9 bis 12, **dadurch gekennzeichnet, dass** das auf ein Endgerät (4) heruntergeladene interaktive Programm mit Mobilfunkdiensten interagiert.

14. System nach einem beliebigen der Ansprüche 9 bis 13, **dadurch gekennzeichnet, dass** die Teile des interaktiven Programms in der Form von Applets in Java programmiert werden.

15. System nach einem beliebigen der Ansprüche 9 bis 14, **dadurch gekennzeichnet, dass** eine Funktionseinheit (1) in der TV-Empfangsvorrichtung (3) eingerichtet ist, wobei diese Funktionseinheit umfasst:
- Ein Lademodul (7), welches das interaktive Software-Programm (22) speichert und die Teile des interaktiven Programms über den Kommunikationskanal (5) an ein Endgerät (4) überträgt;
- ein Kommunikationsmodul (8), welches die bidirektionalen Datenflüsse zwischen einem Endgerät (4) und der TV-Empfangsvorrichtung (3) steuert, wobei die Daten durch den Kommunikationskanal (5) fließen.

16. Fernsehempfangsvorrichtung, **dadurch gekennzeichnet, dass** sie mit einer Funktionseinheit (1) ausgestattet ist, welche umfasst:
- Ein Codiermodul zum Extrahieren eines mit einem Fernsehprogramm (23) verknüpften interaktiven Software-Programms (22) aus einem ausgestrahlten Datenstrom (10);
- ein Lademodul (7), welches das interaktive Programm (22) speichert und bei jeder Verwendung in der Form von Applets programmierte Teile des interaktiven Programms an an ein Mobilfunknetz angebundene Endgeräte (4) überträgt, wobei die Programmteile für die Ausführung auf den Endgeräten (4) bestimmt sind;
- ein Kommunikationsmodul (8), welches den bidirektionalen Datenfluss zwischen einem Endgerät (4) und der Funktionseinheit (1) steuert.

17. Vorrichtung nach Anspruch 16, **dadurch gekennzeichnet, dass** sie eine Schnittstelle für die Kommunikation mit einem Endgerät (4) über einen lokalen Kommunikationskanal (5) umfasst.

18. Vorrichtung nach einem beliebigen der Ansprüche 16 oder 17, **dadurch gekennzeichnet, dass** das Lademodul (7) und das Kommunikationsmodul (8) mit einem Betriebssystem ausgestattet sind und als Software-Module auf diesem Betriebssystem arbeiten.

19. Vorrichtung nach einem beliebigen der Ansprüche 16 bis 18, **dadurch gekennzeichnet, dass** die Teile des interaktiven Programms in der Form von Applets in Java programmiert werden.

20. Mobilfunkendgerät, **dadurch gekennzeichnet, dass** es mindestens umfasst:
- Ein Modul (13) zum Erkennen einer Fernsehempfangsvorrichtung (3) über einen drahtlosen Kommunikationskanal (5);
- ein Betriebssystem zum Ausführen von mindestens einem in der Form eines Applets programmierten und bei jeder Verwendung über den Kommunikationskanal (5) von der Fernsehempfangsvorrichtung (3) heruntergeladenen Teil eines interaktiven Software-Programms; wobei der Teil des interaktiven Programms mit einem auf dieser Fernsehempfangsvorrichtung ausgestrahlten Fernsehprogramm verknüpft ist.

21. Endgerät nach Anspruch 20, **dadurch gekennzeichnet, dass** es ein Anzeigemodul (14) umfasst, welches ein Programm ausführt, um auf seinem Bildschirm den Teil des interaktiven Programms betreffende Informationen anzuzeigen.

22. Endgerät nach einem beliebigen der Ansprüche 20 oder 21, **dadurch gekennzeichnet, dass** es ein Modul (15) umfasst, welches den Teil des interaktiven Programms ausführt, wobei es mit dem lokalen Kommunikationskanal (5) und mit dem Mobilfunknetz kommuniziert.
